(19) Europäisches Patentamt
European Patent Office
Office européen des brevets

(11) **EP 0 704 723 B1**

(12) **EUROPÄISCHE PATENTSCHRIFT**

(45) Veröffentlichungstag und Bekanntmachung des Hinweises auf die Patenterteilung:
**27.12.2000 Patentblatt 2000/52**

(51) Int. Cl.[7]: **G02B 5/30**

(21) Anmeldenummer: **95114684.4**

(22) Anmeldetag: **19.09.1995**

(54) **Verfahren zur Herstellung von Polarisationsfolien**

Method for producing polarising films

Méthode de fabrication pour des feuilles polarisantes

(84) Benannte Vertragsstaaten:
**DE FR GB IT**

(30) Priorität: **30.09.1994 DE 4434964**

(43) Veröffentlichungstag der Anmeldung:
**03.04.1996 Patentblatt 1996/14**

(73) Patentinhaber: **BAYER AG**
**51368 Leverkusen (DE)**

(72) Erfinder:
**Ostoja Starzewski, Karl-Heinz Aleksander, Dr.**
**D-61118 Bad Vilbel (DE)**

(56) Entgegenhaltungen:
**EP-A- 0 297 927      EP-A- 0 374 627**
**EP-A- 0 564 925      DE-A- 1 569 165**
**DE-A- 4 211 779**

• **PATENT ABSTRACTS OF JAPAN vol. 004 no. 122 (P-025) ,29.August 1980 & JP-A-55 077706 (CITIZEN WATCH CO LTD) 11.Juni 1980,**

**Beschreibung**

Die Erfindung betrifft die Herstellung einer Polarisationsfolie mit verbesserter Sperrstellung, insbesondere im Bereich 400 bis 450 nm.

Es ist bekannt, Polarisationsfolien auf der Basis von Polyvinylalkohol herzustellen, die wenigstens eine dichroitische Substanz enthalten. Als dichroitische Substanzen werden Iod, bestimmte organische Farbtoffe (siehe EP-A-297 927 und darin genannte Literatur) und Polyacetylen (EP-B-249 019) empfohlen. Damit die Folien ihre polarisierende Eigenschaft entfalten können, müssen sie gereckt, d.h. auf ein mehrfaches ihrer ursprünglichen, nach dem Gießen oder Extrudieren erhaltenen Länge gedehnt sein.

Je nach dichroitischer Substanz geht man unterschiedlich vor. Bei Verwendung von Iod, das derzeit die am häufigsten verwendete dichroitische Substanz ist verstreckt man die Polyvinylalkoholfolie, die noch keine dichroitische Substanz enthält, und taucht sie dann in eine wäßrige $I_2$/KI-Lösung, aus der das Iod in die Folie diffundiert. Bei Verwendung von organischen Farbstoffen oder von Polyacetylen wird die dichroitische Substanz gemeinsam mit dem Polyvinylalkohol vergossen oder extrudiert und gemeinsam gereckt.

Die heute verwendete iodhaltige Folie hat zwei gravierende Nachteile. Sie zeigt im Bereich von 400 bis 450 nm eine unzureichende Sperrstellung, wodurch die Folie in Sperrstellung nicht das gewünschte Schwarz oder Dunkelgrau, sondern ein Blau zeigt. Dieser Effekt wird mit dem Fachausdruck "blue-leakage" bezeichnet. Außerdem ist die iodhaltige Folie bei Erwärmung instabil, weil das Iodmolekül leicht aus der Folie heraussublimieren kann.

Versuche, die blue-leakage von Iod-Polarisatoren durch Zusatz entsprechender Farbstoffe zu kompensieren, haben bisher nicht zum gewünschten Erfolg geführt:

1. Durch nicht-dichroitische gelbe Farbstoffe (Blau/Violett-Absorber) läßt sich die "leakage" des Sperrzustandes zwar beheben, gegenüber unpolarisiertem Licht und gegenüber linear polarisiertem Licht ist die Folie dann nicht mehr farbneutral. Sie wirkt häufig grünstichig. Im Wellenlängenbereich des Absorbers besteht ungenügender Dichroismus und mangelnde Transparenz.

2. Die Verwendung einer zweiten dichroitischen Substanz zur Behebung der "leakage" ist ebenfalls problematisch, weil zwischen Iod und dieser Substanz chemische (Aggresivität von Iod) und optische (andere Übergangsverbote) Unverträglichkeiten zu Verlusten an polarisierender Wirkung führen, d.h. der Unterschied zwischen Transmissions- und Sperrstellung wird geringer, der Kontrast nimmt ab.

Polarisationsfolien aus Polyvinylalkohol, die Polyacetylen als dichroitische Substanz enthalten (POLPAC), haben den Vorteil, stabil zu sein und in Transmissionsstellung für linear polarisiertes Licht sowie für unpolarisiertes Licht über den gesamten interessierenden Lichtwellenlängenbereich von 400 bis 700 nm eine annähernd gleich starke Transmission und daher keinen Farbstich zu zeigen. Aber auch Polarisationsfolien auf Basis von POLPAC zeigen im Bereich 400 bis 450 nm eine Schwäche in der Sperrstellung, d.h. eine, wenn auch gegenüber Iod geringere, blue leakage. Diese macht sich bei starker Hinterleuchtung mit Licht, das große kurzwellige Anteile hat, bemerkbar.

Aufgabe der vorliegenden Erfindung ist die Vermeidung der blue-leakage ohne die übrigen guten Eigenschaften der POLPAC-Folie zu beeinträchtigen. Dazu war der Polarisationsgrad heller POLPAC-Folien im Wellenlängenbereich 400-500 nm zu steigern.

Gemäss EP-A2-0 564 925, veröffentlicht am 13.10.1993, wird dieses Problem durch Eindiffundieren von Iod nach dem Recken der Folie gelöst.

Überraschenderweise wird diese Aufgabe auch dadurch gelöst, daß man eine POLPAC-Folie einer Hochtemperaturbehandlung unterwirft. Die Hochtemperaturbehandlung wird vorzugsweise kurzzeitig in Abwesenheit von Sauerstoff durchgeführt.

Gegenstand der Erfindung ist daher ein Verfahren zur Herstellung einer im Bereich von 400 nm bis 450 nm in der Sperrstellung verbesserten Polarisationsfolie auf der Basis Polyvinylalkohol, die als lichtpolarisierende Substanz Polyacetylen enthält, das dadurch gekennzeichnet ist, daß die gereckte Polarisationsfolie nach dem Recken wenigstens 10 s auf eine Temperatur zwischen 100°C und 300°C erhitzt wird.

Die Länge der Temperung ist unkritisch und kann 24 h und mehr betragen. Die Temperung wird zweckmäßigerweise abgebrochen, wenn der angestrebte Effekt eingetreten ist. Die Temperung dauert umso länger zur Erzielung des angestrebten Effektes, je niedriger die Temperatur ist und umgekehrt.

Der Ausschluß von Sauerstoff läßt sich dadurch erreichen, daß die Temperung unter Schutzgasatmosphäre, beispielsweise unter Stickstoff oder Argon, durchgeführt oder die Polarisationsfolie vor der Temperung mit einer sauerstoffundurchlässigen Schutzschicht versehen wird, beispielsweise einer Silikatschicht, die durch Eintauchen in eine Wasserglaslösung erzeugt wird.

Vorzugsweise führt man die Temperung während 10 s bis 60 Tage bei 120°C bis 270°C durch, insbesondere 30 s bis 48 h bei 140 bis 250°C. Der angestrebte Effekt tritt umso schneller ein, je höher die Temperatur ist und umgekehrt.

Die Temperung kann kontinuierlich durchgeführt werden, indem die Folie von einer Rolle abgezogen, durch eine Temperierstrecke geführt, abgekühlt und wieder aufgewickelt oder zu Einzelblattware konfektioniert wird. Die Temperung kann auch diskontinuierlich mit Rollen- oder Blattwaren durchgeführt werden.

Die Ausgangsfolie wird dadurch hergestellt, daß man in einer Lösung des Polyvinylalkohol Acetylen polymerisiert, die Polyacetylen enthaltende Polyvinylalkohollösung durch Extrudieren oder Gießen zu Folien verarbeitet und diese auf das 4- bis 13-fache reckt.

Zum Recken wird die Folie so eingespannt, daß das Verhältnis $b_0/l_0 < 3$, vorzugsweise $<2$ ist, wobei $b_0$ die Ausgangsbreite der Folie und $l_0$ die eingespannte Anfangslänge bzw. Recksspaltlänge ist.

Die Polarisationsfolie kann nach der Hochtemperaturbehandlung mit anderen Folien oder Glas kaschiert werden.

Zusätzlich zur beschriebenen Verbesserung der optischen Eigenschaften wird durch das Tempern von verstreckten Polarisationsfolien auch eine Dimensionsstabilität durch Abbau von durch das Verstrecken hervorgerufen Spannungen erreicht. Dies spielt eine Rolle für den Fall thermischer oder klimatischer (hohe Luftfeuchte) Belastung einer Polarisationsfolie.

Das Polyacetylen ist vorzugsweise homogen in der Folie verteilt. Seine Menge beträgt insbesondere 0,1 bis 10 Gew.-% an der gesamten Polarisationsfolie.

### Beispiele

### Beispiel 1

Herstellung des Polyvinylalkohol-Polyacetylen-Copolymerisates:

Unter Luftausschluß wurde bei 45°C in eine 7 gew.-%ige Lösung von Polyvinylalkohol (Vinylacetat-Gehalt ca. 1 Gew.-%) in trockenem N-Methylpyrrolidon pro 100 g Polyvinylalkohol 1,2 mmol [NiPh(Ph$_2$PCHCPhO)-(i-Pr$_3$PCHPh)] eingerührt und während 2 Minuten Acetylen polymerisiert. Das schwarz-blaue Polymerisat wurde in Methanol gefällt, mit Methanol gründlich gewaschen und ca. 8 gew.-%ig in Wasser gelöst. (Ph = Phenyl; i-Pr = Isopropyl).

### Beispiel 2

Herstellung der Gießfolie:

Zur wäßrigen Lösung aus Beispiel 1 wurden 16 Gew.-% Glyzerin bezogen auf Polymer eingerührt. Die fertige Gießlösung wurde feinfiltriert (10 μm), entgast und anschließend bei ca. 40°C auf eine Polyethylenterephtalat (PET)-Trägerfolie in einer Naßschichtdicke von ca. 350 μm aufgetragen.

### Beispiel 3

Herstellung einer Polyacetylen-haltigen Polarisationsfolie (POLPAC-Folie)

Die bis zu einer Restfeuchte von ca. 20 Gew.-% getrocknete Folie wurde von der Trägerfolie abgezogen und bei ca. 180°C gereckt, wobei die Folie zur Reckung so eingespannt wurde, daß das Breiten-/Längenverhältnis $b_0/l_0$ zu Beginn 1,5 war.

Der Reckgrad betrug ca. 700 %. Die Foliendicke nach dem Recken war 10 μm. Die breitbandig hochpolarisierende POLPAC-Folie wurde 2 Minuten in Tetraethoxysilan getaucht, getrocknet und anschließend zwischen 2 Cellulosetriacetat (CTA)-Folien der Dicke 100 μm geklebt. Dazu wurde die POLPAC-Folie auf eine CTA-Folie gelegt, die einseitig mit einer Natriumsilikat-Lösung bestrichen war. Danach wurde eine zweite, ebenfalls mit Natriumsilikat-Lösung beschichtete CTA-Folie mit der feuchten Silikatschicht auf die noch ungeschützte POLPAC-Seite gelegt, der Folienverbund durch die Gummiwalzen eines Kalanders zusamrnengepreßt und 5 Minuten bei 95°C getrocknet. Zwei solche gekreuzte Polarisatoren wirken bei starker Hinterleuchtung mit weißem Licht, welches hohe kurzwellige Anteile hat, tiefblau-violett.

**Beispiel 4**

Hochtemperaturbehandlung einer silikatisierten, CTA-kaschierten POLPAC-Folie

Die Polarisationsfolie aus Beispiel 3 wurde an der Luft bei 200°C unterschiedlich lang getempert. Die steigende Polarisationswirkung im kurzwelligen Bereich ist in Tabelle 1 dargestellt. Der Meßbereich geht von 400 bis 800 nm.

Tabelle 1

| Temperzeit | $T_{unpol}$ (bei 600 nm) | P (bei 600 nm) | P ≥99 | % P≥90 % | P (bei 400 nm) |
|---|---|---|---|---|---|
| min | % | % | nm | nm | % |
| 0 | 38 | 99,9 | 520-680 | 460-730 | 71 |
| 5 | 38 | 99,9 | 510-680 | 450-730 | 75 |
| 10 | 38 | 99,9 | 510-680 | 430-730 | 84 |
| 15 | 38 | 99,9 | 500-680 | 400-720 | 91 |
| 20 | 38 | 99,8 | 480-670 | 400-720 | 95 |
| 30 | 36 | 99,6 | 400-660 | 400-710 | 99 |
| $T_{unpol}$ = Transmission für unpolarisiertes Licht;<br>P = Polarisationsgrad<br>P≥99 % bzw. P≥90 % bedeuten den Bereich des sichtbaren Lichtes, in dem der Polarisationsgrad wenigstens 99 bzw. 90 % ist. | | | | | |

Tabelle 1 zeigt, daß durch die Temperung der Polarisationsgrad im Bereich 400 bis 500 nm deutlich verbessert wird, ohne daß sich andere Eigenschaften signifikant verschlechtern. Zwei gekreuzte Polarisatoren wirken nach der Temperung bei starker Hinterleuchtung mit weißem Licht, welches hohe kurzwellige Anteile hat, schwarz.

**Beispiel 5**

Hochtemperaturbehandlung einer silikatisierten unkaschierten POLPAC-Folie bei 250°C

Einer POLPAC-Folie nach Beispiel 3 wurden vor dem Trocknen die CTA-Deckfolien abgezogen. Dabei verblieb auf der POLPAC-Oberfläche eine dünne, geschlossene Silikatschicht. Die Folie wurde 2,5 Minuten an der Luft bei 250°C getempert. Die Ergebnisse sind in Tabelle 2 dargestellt.

Tabelle 2

| Temperzeit | $T_{unpol}$ (bei 600 nm) | P (bei 600 nm) | P ≥99 % | P≥90 % | P (bei 400 nm) |
|---|---|---|---|---|---|
| min | % | % | nm | nm | % |
| 0 | 39 | 99,9 | 500-680 | 440-720 | 79 |
| 2,5 | 39 | 99,9 | 480-670 | 400-710 | 94 |

**Beispiel 6**

Hochtemperatur-Behandlung einer silikatisierten, mit CTA kaschierten POLPAC-Folie bei 160°C

Eine POLPAC-Folie nach Beispiel 3 wurde bei 160°C 16 h getempert. $T_{unpol}$ (600 nm) betrug vor und nach Temperung 35 %, P (600 nm) 99,9 %. Der Wellenlängenbereich, in dem der Polarisationsgrad wenigstens 99 % betrug, erweiterte sich durch die Temperung von 520 bis 700 nm auf 400 bis 700 nm.

4

**Beispiel 7**

Hochtemperatur-Behandlung einer silikatisierten, mit CTA kaschierten POLPAC-Folie bei 120°C

Eine POLPAC-Folie nach Beispiel 3 wurde an der Luft 11 Tage bei 120°C getempert. $T_{unpol}$ (600 nm) stieg von 34 auf 35 %, P (600 nm) blieb bei 99,9 %.
Der Wellenlangenbereich, in dem der Polarisationsgrad wenigstens 90 % betrug, erweiterte sich von 460 bis 740 nm auf 400 bis 740 nm.

**Patentansprüche**

1.  Verfahren zur Herstellung einer im Bereich von 400 nm bis 450 nm in der Sperrstellung verbesserten Polarisationsfolie auf der Basis Polyvinylalkohol, die als lichtpolarisierende Substanz Polyacetylen enthält, dadurch gekennzeichnet, daß die gereckte Polarisationsfolie nach dem Recken wenigstens 10 s auf eine Temperatur zwischen 100°C und 300°C erhitzt wird.

2.  Verfahren nach Anspruch 1, dadurch gekennzeichnet, daß die Temperaturbehandlung 10 s bis 60 Tage bei 120°C bis 270°C durchgeführt wird.

3.  Verfahren nach Anspruch 1, dadurch gekennzeichnet, daß die Temperaturbehandlung 30 s bis 48 h bei 140°C bis 250°C durchgeführt wird.

4.  Verfahren nach Anspruch 1, dadurch gekennzeichnet, daß die Temperaturbehandlung unter Ausschluß von Sauerstoff durchgeführt wird.

5.  Verfahren nach Anspruch 4, dadurch gekennzeichnet, daß die Polarisationsfolie vor der Temperung beidseitig mit einer Silikatschicht versehen wird.

6.  Verfahren nach Anspruch 1, dadurch gekennzeichnet, daß der Polyacetylenanteil der Polarisationsfolie 0,1 bis 10 Gew.-% beträgt.

7.  Verfahren nach Anspruch 1, dadurch gekennzeichnet, daß eine Polarisationsfolie eingesetzt wird, die vor der Temperaturbehandlung auf das 4- bis 13-fache gereckt wurde.

**Claims**

1.  Process for the production of a polarizing foil based on polyvinyl alcohol which is improved in the range from 400 nm to 450 nm in the blocking position and which contains polyacetylene as a light-polarizing substance, characterized in that after the stretching, the stretched polarizing foil is heated to a temperature of from 100°C to 300°C for at least 10 seconds.

2.  Process according to Claim 1, characterized in that the heat treatment is carried out at from 120°C to 270°C for from 10 seconds to 60 days.

3.  Process according to Claim 1, characterized in that the heat treatment is carried out at from 140°C to 250°C for from 30 seconds to 48 hours.

4.  Process according to Claim 1, characterized in that the heat treatment is carried out with exclusion of oxygen.

5.  Process according to Claim 4, characterized in that the polarizing foil is provided with a silicate layer on both sides before the heat treatment.

6.  Process according to Claim 1, characterized in that the polyacetylene proportion in the polarizing foil is from 0.1 to 10% by weight.

7.  Process according to Claim 1, characterized in that a polarizing foil is employed which has been stretched from by a factor of from 4 to 13 before the heat treatment.

**EP 0 704 723 B1**

**Revendications**

1. Procédé de fabrication d'une feuille polarisante à base de poly(alcool vinylique) améliorée dans la position d'arrêt dans le domaine de 400 nm à 450 nm, qui contient du polyacétylène comme substance polarisant la lumière, caractérisé en ce que la feuille polarisante étirée est chauffée au moins 10 s à une température située entre 100°C et 300°C après l'étirage.

2. Procédé selon la revendication 1 caractérisé en ce que le traitement thermique est mis en oeuvre 10 s à 60 jours à 120°C à 270°C.

3. Procédé selon la revendication 1 caractérisé en ce que le traitement thermique est réalisé 30 s à 48 h à 140°C à 250°C.

4. Procédé selon la revendication 1 caractérisé en ce que le traitement thermique est mis en oeuvre à l'abri de l'oxygène.

5. Procédé selon la revendication 4 caractérisé en ce que la feuille polarisante est munie d'une couche de silicate des deux côtés avant le traitement thermique.

6. Procédé selon la revendication 1 caractérisé en ce que la fraction de polyacétylène de la feuille polarisante est de 0,1 à 10% en masse.

7. Procédé selon la revendication 1 caractérisé en ce que l'on utilise une feuille polarisante qui a été étirée jusqu'à 4 à 13 fois avant le traitement thermique.

**6**